# EUROPEAN PATENT APPLICATION

(11) **EP 3 407 057 A1**
(43) Date of publication of application: **28.11.2018**
(21) Application number: 17172470.1
(22) Date of filing: 23.05.2017
(51) Int. Cl.: G01N 27/20, G01N 33/46

(54) **NAIL DETECTION METHOD AND APPARATUS**

(71) Applicant: RDB Pallets bvba, 8470 Gistel (BE)
(72) Inventor: Vandenhende, Dirk, 8970 Poperinge (BE); Coene, Ruben, 8470 Gistel (BE)
(74) Representative: Brantsandpatents bvba

(57) **Abstract**

A method for detecting fasteners being essentially level with or sticking out of a surface of a transport unit for carrying goods, comprising the steps of:
a) conveying the transport unit in a machine direction underneath a detector comprising a set of at least two separated contact electrodes arranged essentially parallel to the machine direction, wherein the electrodes comprise a pre-defined electrode thickness de and the electrodes are separated over a pre-defined interelectrode distance di,
wherein the surface makes contact continuously with at least two adjacent electrodes of the set of electrodes during conveyance of the transport unit underneath the detector;
b) applying a voltage difference across two adjacent contact electrodes during at least part of step (a);
c) measuring an electrical parameter such as a resistance, a conductivity, a short circuit, a current or a voltage, between said two adjacent contact electrodes;
detecting a change in the electrical parameter between said two adjacent contact electrodes, thereby detecting a fastener being essentially level with or sticking out of the surface of the transport unit.

## Description

### Technical Field

The present invention relates to an improved nail detection method and apparatus for detecting nails being essentially level with or sticking out of wooden pallets. The method and apparatus can more generally be used to detect fasteners such as nails or screws which unwantedly are level with or stick out of a non-conducting surface. Typically the detection is performed in order to prevent damage to goods placed on the transport surface of a goods carrier such as a pallet for further transport and/or on a bottom surface of a goods carrier to prevent damage to a platform, a floor or goods below the goods carrier.

### Background

Wooden pallets are nowadays commonly used for transporting goods. These wooden pallets typically have a standardized size and are made by nailing planks on a number of parallel wooden beams or supporting structures.

For instance, a supporting structure may be manufactured by nailing a plank onto an upper side of three wooden blocks: one block at each longitudinal end of the plank, and one block in the middle. Three of such supporting structures may then be positioned parallel to each other along a longitudinal direction, but distanced apart. Subsequently a number of planks may be attached in a transverse direction onto the supporting structures, whereby the end of each transverse plank is attached to the two outermost of the supporting structures, and the middle of each transverse plank is attached to the middle of the three parallel supporting structures. The transverse planks form a surface for carrying goods such as crates or bags. Optionally a number of reinforcement elements, such as planks or beams, can be attached to a lower side of the supporting structures, longitudinally and/or transversely. The supporting structures and the optional reinforcement elements form a base which allows stacking the pallets more easily. The attachment of the transverse planks forming the surface, to the supporting structures is typically done by driving nails, e.g. by pneumatically or hydraulically shooting or pressing, through the upper side of the planks, i.e. the sides forming the surface, into the supporting structures. As a result, the surface shows a number of rows of nail heads equal to the number of supporting structures, in the present example three rows. At least one nail is needed per transverse plank and per supporting structure. In the case of five transverse planks and three supporting structures, this leads to fifteen nails per pallet, divided in three rows of five nails.

In manufacturing wooden pallets, the nails are intended to be correctly nailed into the planks. Hereby typically, the head of the nail is at most level with the surface and preferably is slightly below said surface, e.g. about 2 mm below the surface. Indeed, packaging industry typically requires that the top of the fastener is at least 2mm below the surface. Clearly, if for some reason a nail is not correctly driven into the transverse plank, part of the nail may be essentially level with or stick out of the surface, thereby bound to cause damage to goods which may be transported on the pallet. Also, incorrectly applied nails could present a safety risk for human handlers or could damage machinery for handling pallets or the goods transported thereon.

The reasons for incorrectly applied nails can be e.g. a faulty nailing apparatus, a blunt or otherwise faulty nail, bad nail material the presence of a gnarl or knot in the transverse plank or supporting structure, etc. Hereby, the nail may incorrectly applied in different ways, e.g. the nail may not be nailed deep enough and the nail head may be essentially level with or stick out of the surface, the nail may be bent and part of the nail (head, point or part of the body) may be essentially level with or stick out of the surface, etc. Due to the many different causes and types of errors, it is important to do a quality control on the final pallet to ensure that no nails are essentially level with or stick out of the surface of the pallet.

Obviously, quality control can also be performed if the pallets are made using other types of fasteners such as staples, pins, tacks, screws, rivets, etc, and/or if the transverse planks comprise or are made of another material than wood, such as plastic, polymer, co-polymer, in particular a rigid polymer.

Prior art methods for nail detection in pallets include:
- inductive detection methods, which have the disadvantage that one cannot detect nails under the surface and that the detection distance is difficult to obtain;
- mechanical detection e.g. by rolls and valves, which have the disadvantage of not discriminating between outsticking nails and irregularities in the wood of the panel;
- automated camera detection. This can be based on comparison techniques, which can be difficult to use due to the large diversity in the used material. Wood is a natural product, leading to large differences when imaging wood for packaging. Or camera detection can be based on interpretative techniques, wherein e.g. the intensity of the pixels in the image are compared. However, sometimes there is not enough difference between different elements of the panel, e.g. the nail and the wood, and the large variation in materials can make it difficult to provide an automated interpretation on the basis of images.

European application EP2667185 A1 discloses a method for detecting defects of a pallet, especially in the nailing, by combining optical and thermographic inspection. Optical inspection is carried out by a camera or a laser scanner and subsequently, a 3d-model is created. For the thermographic inspection, the metal in the pallet is heated by electromagnetic induction and a thermal image is recorded. The position of the nails is then registered in the optical 3d-model. If defects are detected, their positions are determined and a label is attached at the position of each defect. The disclosed method is complex and the nail detection apparatus tends to be very costly, both in production as in maintenance. Furthermore, as the transverse planks of a pallet could be rather rough and uneven, the disclosed method tends to produce false positives with respect to nails which are essentially level with or stick out of the surface, i.e. the method tends to mark pallets as faulty even if the pallet does not have an incorrectly applied nail.

It is estimated that tens of millions of pallets are manufactured per year in Europe alone. Given that each pallet requires typically at least 15-45 nails, the number of nails applied in the pallet manufacturing industry in Europe is of the order of one billion (10⁹). Clearly, the relative error of any quality control method needs to be very low in order to ensure that none or only a small amount of faulty pallets are being produced.

The large amount of pallets is typically produced automatically or semiautomatically at a high rate. Therefore, the quality control also needs to be performed at a high rate, and preferably in-line, i.e. in the same production line as the pallets. Alternatively, quality control of existing pallets may also be performed, in particular by companies which transport goods having a low tolerance against rupture and thus requiring an extremely good quality control. Exemplary industries in which low to zero tolerance is necessary are the food and agricultural industry, chemical industry, textile industry, etc.

The present invention overcomes the above mentioned problems. Hereby, the present invention reduces the relative error in quality control of pallets. The present invention also allows a high rate quality control which is performed in-line with the production line of the pallets, or which can be performed on existing pallets to ensure that no pallet has fasteners such as nails being essentially level with or sticking out of the surface of a pallet.

Although the arguments above relate mainly to pallets, the problems also appear more generally to all transport units for carrying goods which can have fasteners being level with or sticking out of a surface of the transport unit.

### Summary of the Invention

The present invention concerns a method and apparatus for the detection of fasteners being essentially level with or sticking out of a surface of a transport unit for carrying goods, such as a pallet. The method and apparatus are further described in the claims and in the following.

The present invention concerns a method for detecting fasteners being essentially level with or sticking out of a surface of a transport unit for carrying goods, such as a pallet. The method comprises the steps of:
(a) conveying the transport unit in a machine direction underneath a set of at least one detector comprising a set of at least two separated contact electrodes arranged essentially parallel to the machine direction,
   wherein the electrodes comprise a pre-defined electrode thickness and the electrodes are separated over a pre-defined inter-electrode distance,
   wherein the surface makes contact continuously with at least two adjacent electrodes of the set of electrodes during conveyance of the transport unit underneath the detector;
(b) applying a voltage difference across two adjacent contact electrodes during at least part of step (a), preferably continuously and preferably essentially during the complete step (a);
(c) measuring an electrical parameter such as a resistance, a conductivity, a short circuit, a current or a voltage, between said two adjacent contact electrodes;
(d) detecting a change in the electrical parameter between said two adjacent contact electrodes, thereby detecting a fastener being essentially level with or sticking out of the surface of the transport unit.

The present invention also concerns an apparatus for detecting fasteners being essentially level with or sticking out of a surface of a transport unit for carrying goods, such as a pallet. The apparatus comprises
- a conveyor for conveying transport units in a machine direction;
- a set of detectors arranged above the conveyor, each detector comprising a set of at least two separated contact electrodes arranged essentially parallel to the machine direction,
   wherein the electrodes comprise a pre-defined electrode thickness *dₑ* and the electrodes are separated over a pre-defined inter-electrode distance *dᵢ*,
   wherein each of the contact electrodes are configured to continuously make contact with the surface of the transport unit;
- electrical circuitry comprising power supply arranged to provide a voltage difference between two adjacent contact electrodes and comprising a measuring circuit arranged for measuring an electrical parameter such as a resistance, a conductivity, a short circuit, a current or a voltage, between said two adjacent contact electrodes, and
- an indicator arranged for detecting a change in the electrical parameter, thereby detecting a fastener being essentially level with or sticking out of the surface of the transport unit.

The present invention further also concerns a detector such as described above, which can be used in an apparatus or method of the present invention.

The term "surface" of a transport unit, refers in this text to a side of a transport unit which preferably is essentially flat, and which preferably is formed by outer surfaces of planks or boards, and which surface is fastened to a base or a supporting structure with fasteners in order to obtain the transport unit. The surface of the transport unit can hereby refer to a transport surface onto which goods to be transported can be placed, or it can refer to a bottom surface, which can be placed on a floor or platform or on top of goods or on top of another transport unit, or it can refer to any other surface of a transport unit which needs to be checked for fasteners being essentially level with or sticking out of said su rface.

In a very preferred embodiment, the transport unit is a pallet. The term "pallet" hereby refers to a transport device comprising a transport surface onto which goods such as bags, containers, boxes, break bulk cargo etc. can be deposited for easy transport, in particular for easy loading and unloading. The transport surface is typically formed by the upper surfaces of a set of planks or boards which are fastened onto a base by fasteners. The base comprises a height and typically an open structure such that the pallet can be handled by a forklift whereby the forks can be inserted into the open structure created by the base underneath the transport surface. The fastening is done by driving fasteners such as nails through the upper surfaces of the planks or boards into the base. A pallet can also comprise a bottom surface, which can also suffer from fasteners such as nails being essentially level with or sticking out of the bottom surface. Either the transport surface or the bottom surface, or both, can be subjected to the method of the present invention.

In some embodiments, the transport surface and the bottom surface of a transport unit, such as a pallet, are interchangeable, i.e. the transport unit can be used upside down, whereby the bottom surface can serve as a transport surface. Note that in the present invention, fasteners being essentially level with or sticking out of the bottom surface can be detected using the same method and apparatus as for the transport surface, by simply turning the transport unit upside down during the detection method. Other embodiments of the present invention include an apparatus with multiple detectors, at least one detector positioned on a transport surface side of the transport unit, and at least one detector positioned on a bottom surface side of the transport unit, thereby allowing detection on both the transport surface and the bottom surface.

In order for the base to comprise a height and open structure for allowing handling by a forklift, the base can typically comprise a number of parallel supporting structures such as beams or planks which are reinforced by e.g. a set of blocks. The planks or boards of the surface are then preferably fastened in a transverse direction with respect to the direction of the parallel supporting structures. Typically, the planks and boards for the surface and/or the supporting structures are made from wood, although other materials could also be used as an alternative or in addition to wood, such as plastics or polymers having an appropriate strength and rigidity. The fasteners are made from another material than at least the surface. Typically the fasteners are made from a metal or alloy such as iron or steel. The electrical properties, and in particular the conductivity, of the materials of the surface and of the fasteners are different. Hereby, the conductivity of the fasteners' material is typically much higher than the conductivity of the surface's material. Preferably the conductivity of the material of the fasteners is higher than the conductivity of the material of the surface by a factor of 10, more preferably by a factor of 100, still more preferably by a factor 1000 or even more. Hereby, the surface is preferably made from electrically insulating material whereas the fasteners are made from electrically conducting material. Consequently, the electrical parameter which is measured between adjacent electrodes in the present invention preferably concerns a resistance, a conductance or an electrical current. Hereby, the electrical parameter is substantially different when adjacent contact electrodes touch the surface only or when adjacent contact electrodes at least partially touch a fastener, allowing a clear and unambiguous detection of a change in the electrical parameter. Indeed, in the most common case of the transport platform being comprised of insulating material such as wood and the fasteners being comprised of a conducting material such as steel, the detection of a change in electrical parameter boils down to the detection of a short circuit between adjacent electrodes.

The term "fasteners" refers to strong and small types of fastening means preferably made from an electrically conductive material, preferably metal, more preferably comprising iron, even more preferably iron-based alloys such as steel. The fastening means within the context of the present document are used to attach a surface of a transport unit or the components forming a surface such as planks or boards, to a support underneath the surface.

The method according to the present invention is based on a movement of the transport unit with respect to a set of detectors, the movement defining the machine direction of the apparatus and method of the present invention. Hereby, the detectors have a set of contact electrodes which have a pre-defined electrode thickness *dₑ* and whereby adjacent electrodes are separated over a pre-defined inter-electrode distance *dᵢ*. Hence, a fastener being essentially level with or sticking out of the platform surface with a width larger than the width of an electrode thickness flanked by two inter-electrode distances (i.e. *dₑ* + *2dᵢ*), will certainly be detected. The sensitivity of the detector can be enhanced even further by e.g. having a large electrical contact surface of the contact electrodes, by conveying the transport unit under the detector in a skewed manner, and/or by using two or more detectors which are positioned along the machine direction, i.e. at least an upstream detector and a downstream detector, whereby the electrodes of the electrode set of the first detector are displaced transversally, e.g. over a distance *(dₑ*+*dᵢ)*/*2*, compared to the electrodes of the electrode set of the second detector.

In many cases, the width of the fasteners is known, thereby allowing the skilled person to choose the electrode thickness *dₑ* and the inter-electrode distance *dᵢ* into account the fastener width. In this respect, the present invention also comprise a system comprising a nail detection apparatus in accordance with the present invention and a transport unit such as a pallet comprising a set of fasteners.

### Overview of the figures

**Figure 1a** illustrates part of a set of electrodes which are pivotably suspended around a common pivot axis, adjacent electrodes being separated by insulators.
**Figure 1b** illustrates another embodiment of the present invention wherein two electrode wires are helically wound around a roll which is rotatably suspended.
**Figure 2** shows a perspective view from the bottom side of a detector according to the present invention.
**Figure 3** shows a perspective view from a top side of a detector according to the present invention.
**Figure 4** shows a front view of a detector according to the present invention.
**Figure 5** shows a cross sectional view from the side of a detector according to the present invention, the cross section taken along a slab-like insulator.
**Figure 6** shows another cross sectional view from the side of a detector according to the present invention, the cross section taken along a slab-like sliding electrode.
**Figure 7** shows an apparatus according to the present invention, wherein three detectors are mounted on a bridge thereby allowing transport units to be conveyed underneath for nail detection.
**Figure 8** illustrates part of the electrical circuitry which can be used to avoid having a complete short circuit upon detection of a fastener being essentially level with or sticking out of the surface.

### Detailed description of the invention

The present invention concerns an apparatus and method for detecting nails, in accordance with the claims and as specified above. The present invention also concerns a detector device which can be used in the apparatus.

As indicated above, transport units such as pallets are typically made by fastening a set of planks or boards onto a base. The upper surfaces of the planks or boards hereby form the surface. The base comprises a height and in the case of a pallet also typically an open structure such that it can be handled by e.g. a forklift whereby the forks ca be inserted into the open structure created by the base underneath the surface. The fastening is done by driving fasteners such as nails through the upper surfaces of the planks or boards into the base.

In a preferred embodiment, the electrodes of a set of electrodes of a detector according to the present invention, are independently suspended, thereby allowing independent movement of the different electrodes of the set. More preferably, the electrodes are independently pivotably suspended around a transversally arranged essentially horizontal pivot axis. The term "transversally" herein refers to an orthogonal direction to the machine direction. The term "horizontal" herein refers to the normal meaning. However, it should be clear for the skilled person that it's meaning can be broadened to include a plane which is essentially parallel to the surface of transport units which are to be controlled by the detector and apparatus of the present invention. In the majority of applications, this surface will be conveyed essentially horizontal underneath the detector. As a result the contact electrodes make continuously contact with the surface of the transport unit due to gravity, or vice versa, the surface makes contact continuously with at least two adjacent electrodes of the set of electrodes during conveyance of the transport unit underneath the detector due to gravity.

In a preferred embodiment, the set of electrodes are suspended around two pivot axes, preferably whereby electrodes are alternatingly suspended on one or the other pivot axis.

Alternatively or additionally, the contact electrodes can be made to make contact with the surface of the transport unit by a set of mechanical actuators such as springs or leaf springs, which push the electrodes to the surface.

In a very preferred embodiment, the contact electrodes are sliding electrodes comprising a sliding surface for making a sliding-type contact with the surface of the transport unit. In another embodiment, the set of electrodes are rotatably suspended around a rotation axis and make contact with the surface by rolling over the surface.

In another embodiment, a contact electrode may comprise at least 1 or 2 conducting wires wound around a roll made of an insulating material, e.g. plastic. By placing a plurality of these rolls with wires next to each other, one can also achieve a setup of alternating positive and negative electrodes. In case the roll comprises 2 wires, one of the wires then can be a positive electrode and the other a negative electrode. The rolls can roll over the surface. The set of contact electrodes may in an embodiment also comprise an insulating roll around which at least two wires are rolled in a helical manner, i.e. in a double-screw-type configuration, thereby also effectively obtaining a set of alternating positive and negative electrodes. The roll can be rotatably suspended around a rotation axis such that it can roll over the surface. The rotation axis itself can preferably be suspended in a height-variable manner such that the roll can follow variations in the height level of the surface of the transport unit.

In embodiments, the contact electrodes may comprise conductors following a parallelogram-type of path or round conductors rolling over the surface.

In a preferred embodiment, the position of contact between contact electrodes and surface is more downstream along the machine direction than the position of the pivot axis onto which the electrodes are suspended. This allows easy conveyance of the transport unit underneath the detectors as the electrodes can easily be lifted by the transport unit itself.

In a preferred embodiment, the voltage difference between adjacent electrodes is a DC voltage difference, preferably at least 10VDC, such as 11VDC, 12VDC, 13VDC, 14VDC, 15VDC, 16VDC, 17VDC, 18VDC, 19VDC, 20VDC, 21 VDC, 22VDC, 23VDC, 24VDC, 25VDC, 26VDC, 27VDC, 28VDC, 29VDC, 30VDC, 31 VDC, 32VDC, 33VDC, 34VDC, 35VDC, 36VDC or any value therebetween, more preferably between 22VDC and 26VDC, most preferably about 24VDC. In a preferred embodiment, the negative electrode of two adjacent electrodes is grounded.

In another embodiment, the voltage difference may be an time-dependent voltage difference, which can be an AC voltage difference, a block-type voltage difference, or a saw-tooth voltage difference. Note that in case of a time-dependent voltage different, references in this document to "positive electrode" and "negative electrode" may be interpreted as "electrode connected to a first pole of the voltage source" and "electrode connected to a second pole of the voltage source" respectively.

In a preferred embodiment, the contact electrodes comprise steel, more preferably S235 steel. This S235 steel has a tensile strength of 235 MPa at a thickness of 16mm. In a very preferred embodiment, the contact electrodes are made from steel such as S235. However, it is also possible that the electrodes are made from a combination of materials, whereby at the positon of the electrode where contact with the surface of the transport unit is expected, a strong and electrically conducting material such as steel (e.g. S235) is provided.

Alternatively or additionally, the electrodes comprise bronze, aluminum, cupper, messing, conducting plastics, and/or stainless steel.

In a preferred embodiment, the electrodes are partially coated, preferably powder coated, and preferably everywhere except on the parts of the electrodes which need to make contact with the surface of the transport unit and where the electrodes are connected to the electrical circuitry of the apparatus. In embodiments, the coating may comprise a position-dependent thickness, the electrodes may be galvanized, the coating may be a PTFE coating and/or the coating may lead to a passivation of the electrodes.

The electrodes are preferably suspended around a pivot axis comprising glass fiber, preferably made from glass fiber.

In a preferred embodiment, the set of electrodes consist of a set of positive electrodes and a set of negative electrodes, whereby positive electrodes alternate with negative electrodes such that, with the exception of the electrodes at the side ends, each positive electrode is adjacent to and in between two negative electrodes, and each negative electrode is adjacent to and in between two positive electrodes. Note that the term "adjacent" means that they are positioned closely to each other, but not touching each other, i.e. they are separated by an inter-electrode distance *dᵢ*, which is preferably essentially constant. In a more preferred embodiment, the set of positive electrodes is suspended on a first pivot axis and the set of negative electrodes is suspended on a second pivot axis which is off-set but preferably parallel to the first pivot axis.

In a preferred embodiment, the fasteners comprise a fastener body and optionally a fastener head. The fastener body comprises a body width or body diameter and the optional fastener head comprises a head width or head diameter. For instance, in the very preferred embodiment, wherein the fasteners are nails, the nails preferably comprise a nail body having a nail body diameter and a nail head having a nail head diameter. Thereby, in such embodiments, the width of an electrode thickness flanked by two inter-electrode distances (i.e. *dₑ* + *2dᵢ*), is preferably smaller than the head width or head diameter, and more preferably smaller than the body width or body diameter. For instance, in the case of nails as fasteners, a common type of nail has a head diameter of 6mm. Hence, then *dₑ* + *2dᵢ* is preferably smaller than 6mm. A common type of nail also can have a body diameter of 2 to 4mm. Hence, *dₑ* + *2dᵢ* is even more preferably smaller than 2 to 4 mm, such as 4mm, 3mm, 2mm, 1mm or any value therebetween or even smaller. Hereby, in a particularly preferred embodiment, the electrode thickness *dₑ* is about equal to the inter-electrode distance *dᵢ*.

In a very preferred embodiment, the transport unit, which preferably is a pallet, comprises wood or wood-type material, more preferably the surface comprises wood or wood-type material, such as planks or boards. Wood-type material may comprise high density fiber (HDF) material or medium density fiber (MDF) material. Alternatively or additionally, the transport unit may comprise plastic material such as polymers.

In a preferred embodiment, the fasteners comprise metal, preferably iron, more preferably steel, such as steel nails.

In a very preferred embodiment, the surface of the transport unit, preferably the pallet, is made of insulating material such as wood or wood-type material, which is fastened to the base with fasteners made of a conductive material. The base of the transport unit, e.g. the pallet, is preferably also made of an insulating material such as wood or wood-type material.

In a preferred embodiment, the electrical circuitry of the apparatus comprises a measuring circuit arranged for measuring a resistance, a conductivity, a short circuit, a current or a voltage, between said two adjacent contact electrodes. In view of the above preferred embodiments wherein the fasteners are electrically conducting and the surface is insulating, measuring a change in electrical parameters boils down to observing a short circuit between adjacent electrodes.

Hence, in a preferred embodiment, the electrical circuitry comprises a voltage source, preferably a DC voltage source, which is connected in parallel to a set of positive electrodes alternated by a set of negative electrodes, and said voltage source being connected in series with a capacitor to avoid a complete short circuit, should a positive electrode and an adjacent negative electrode make contact with the same fastener. Alternatively or additionally, a complete short circuit may be avoided by using an electrical resistor, an induction coil or combinations thereof with or without a capacitor, and in series or parallel with the voltage source. In embodiments, the electrical circuitry comprises a Programmable Logic Circuit (PLC) or other type of electronical control circuit for electronically controlling the measurement and steering processes. Such a PLC or control circuit could be used in the electrical circuitry in addition to or as an alternative to e.g. a capacitor, a resistor, an induction coil, in order to measure the electrical parameter, e.g. the resistance, the change of which signals a fastener being essentially level with or sticking out of the surface. The measurement can be analogue or digital. In the case the measurement of the electrical parameter is obtained with a PLC, an analogue measurement is preferred.

In a preferred embodiment, the contact electrodes have a slab-like form with the pre-defined electrode thickness. In such embodiment, the contact electrodes are preferably separated by a set of slab-like insulators having a thickness of at most said inter-electrode distance, each insulator of the set being positioned in between two adjacent electrodes. The insulators ensure that no direct contact between adjacent electrodes is made, e.g. due to faulty positioning or loose attachment to the pivot axis. The insulators can also ensure that the inter-electrode distance between adjacent electrodes is maintained and/or controlled easily. Preferably, the insulators are also suspended on a pivot axis, preferably the same pivot axis as the electrodes. In a preferred embodiment, the insulators are suspended at the pivot axis at or near a proximal end of the slab-like insulators. In another embodiment, each insulator is suspended pivotably to an adjacent electrode near a proximal end of both insulator and adjacent electrode. In a preferred embodiment, the insulators are interconnected to each other by a connection axis at a distal end of the insulators. Due to this interconnection at a distal end, the set of insulators are not independently suspended, but rotate commonly around the pivot axis. More preferably, the connection axis is provided above a distal end of the electrodes, such that the connection axis is supported by at least one electrode. This has two advantages. Firstly, the weight of the insulators can then press down on the at least one electrode which supports the connection axis, thereby ensuring that the electrodes are pressed well against the surface. Secondly, the insulators can be prevented from making direct contact with the surface as one can ensure all insulators to be positioned in respect of the electrode which is elevated the most by the surface. As such, one can design the shape and size of the insulators to be such that they provide excellent stability to the electrodes along a large portion of their side surface while still ensuring that the insulators do not touch the surface and thus do not damage nor get damaged by said surface.

In a preferred embodiment, the fastener detection is signaled to an operator or another machine and/or the transport unit is re-directed if a change in electrical parameter is detected. Hereby the signal can be visual such as a red lamp or auditory such as a siren or buzzer. The signal may also comprise an error signal which can be sent, preferably electronically, to other machines. Hence, in a preferred embodiment, the apparatus according to the present invention comprises signaling means for signaling the fastener detection to an operator and/or another machine and/or re-directing means for re-directing the transport unit if a change in electrical parameter is detected.

Note that the method and apparatus of the present invention may be used in combination with other methods known in the art, such as
- inductivity-based methods with e.g. induction sensors;
- optical methods with e.g. camera's;
- laser methods, wherein one or more lasers or laser beam scan the surface, both parallel, as slanted under an angle as perpendicular to the surface, while the transport unit is moving or not.

### EXAMPLES

In the following, exemplary embodiments of the present invention are illustrated making reference to the accompanying drawings. In the examples, reference is made to pallets being the preferred transport units, but it should be clear to the skilled person that other types of transport units can be used.

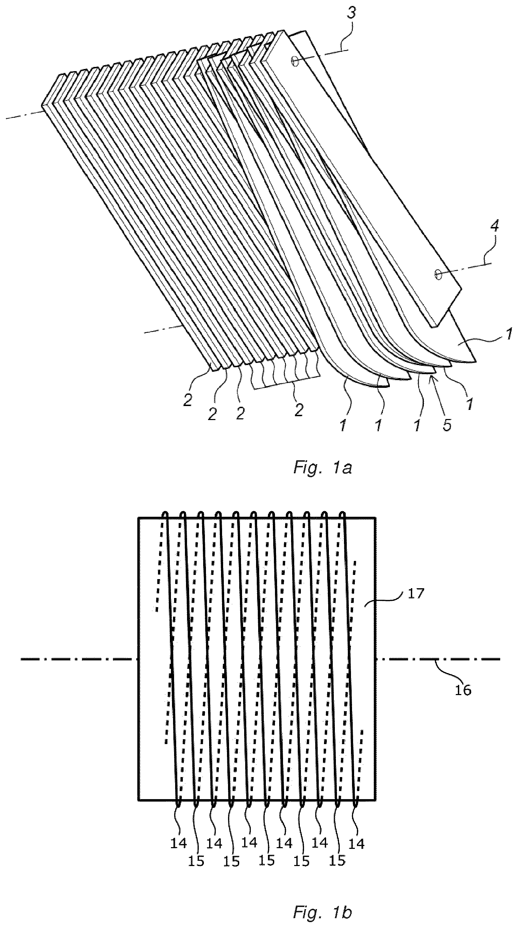

Figure 1a illustrates part of a set of slab-like contact electrodes (1) which are pivotably suspended around a common pivot axis (3), adjacent electrodes being separated by insulators (2). The insulators (2) are here also suspended around the pivot axis (3), and are furthermore interconnected by a connection axis (4) which, in the figure, extends behind the electrodes. Each of the contact electrodes comprises a contact surface (5) which preferably is curved to allow a smooth passage of the pallet while still keeping contact with the pallet's surface.

Figure 1b illustrates an alternative embodiment of the present invention, wherein two conducting wires (14, 15) are helically wound around an insulating essentially cylindrical roll (17). The roll can be rotatably suspended around a rotation axis (16), which rotation axis is preferably height-variably suspended such that the roll can roll over the surface of a pallet while following variations in height of the surface. One of the conducting wires (14) can be connected to a positive pole of the voltage source or electrical circuitry, the second of the conducting wires (15) can be connected to the negative pole of the voltage source or electrical circuitry.

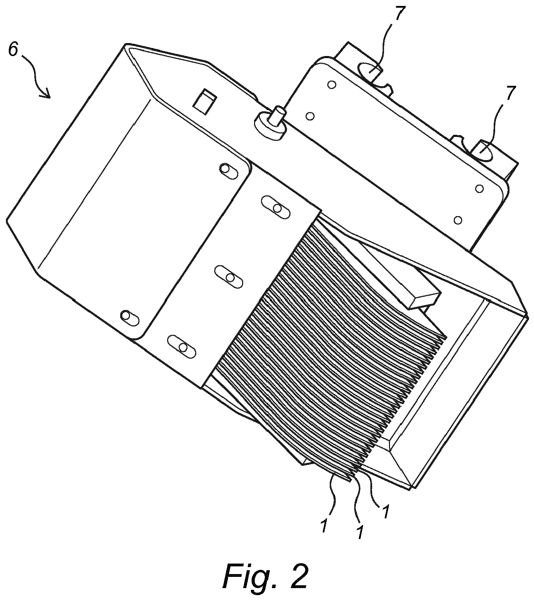

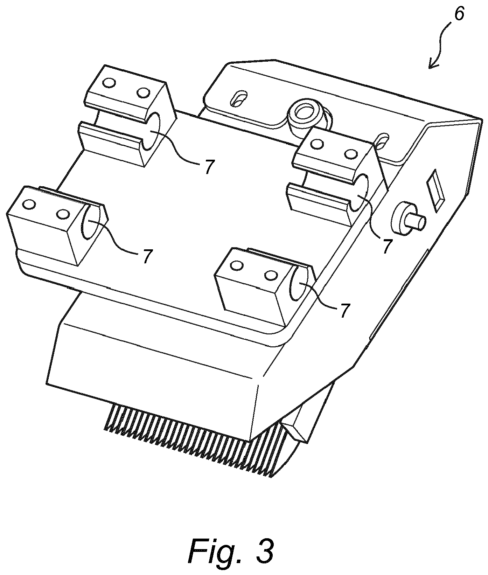

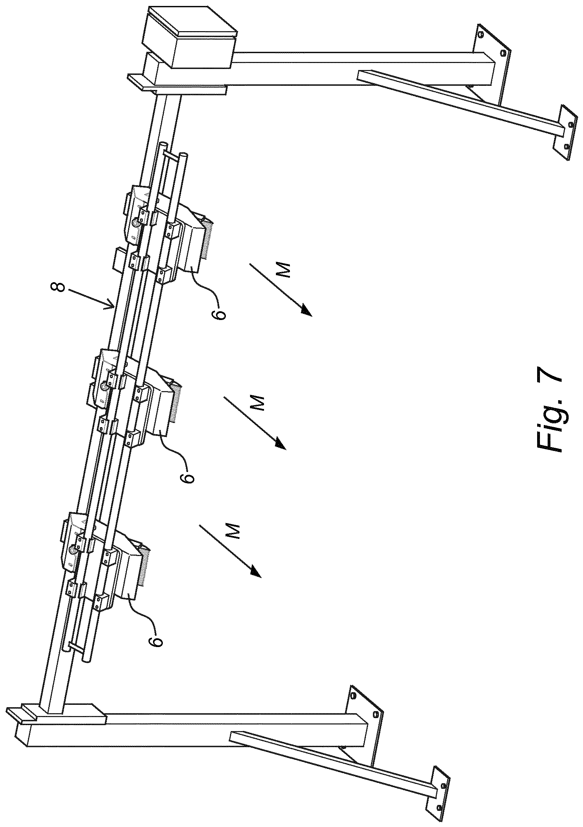

Figures 2 to 6 show different views from a detector (6) according to the present invention. The detector comprises slab-like sliding contact electrodes (1) positioned adjacent to each other, but separated by an essentially constant inter-electrode distance *dᵢ*, and the electrodes (1) having an essentially constant electrode thickness *dₑ*. The detector (6) also comprises mounting means such as a clamping system or a set of gripping hooks (7) to mount the detector to a suspension bridge (8) as shown in figure 7, together with an indication of the machine direction (M).

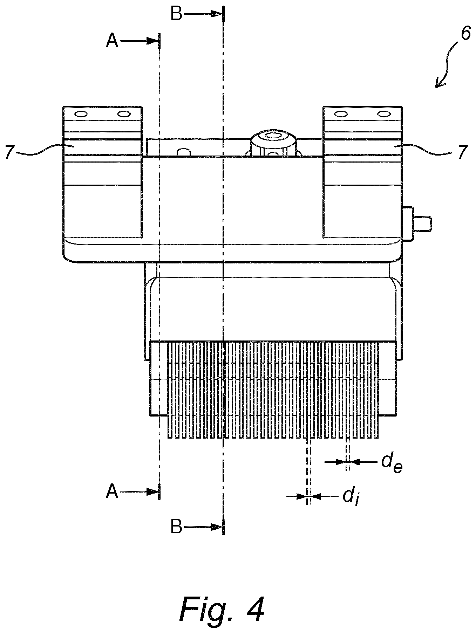

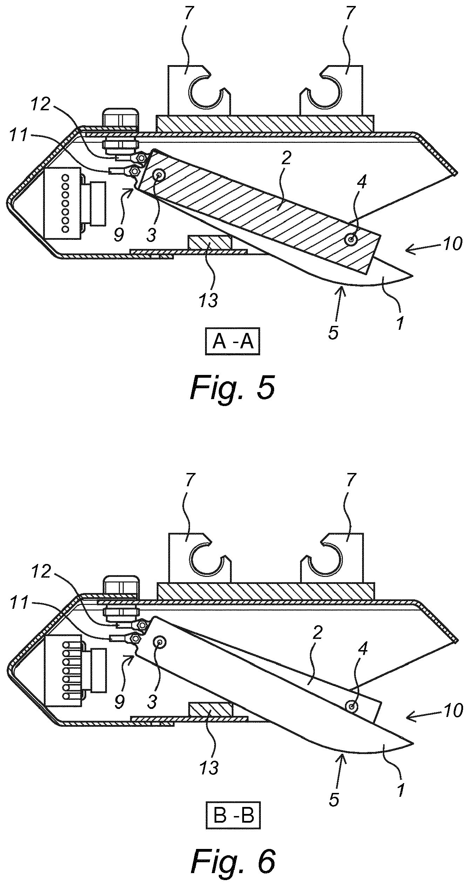

Figure 5 shows a cross sectional view from the side of a detector according to the present invention, the cross section taken along a slab-like insulator in accordance with line AA in fig. 4. Figure 6 shows another cross sectional view from the side of a detector according to the present invention, the cross section taken along a slab-like sliding electrode in accordance with line BB in figure 4.

Figure 5 shows an insulator (2) in front of an electrode (1). The insulator (2) and electrode are pivotably suspended at a proximal end (9) around a pivot axis and the insulator (2) is connected to another insulator by a connection axis (4) positioned above the electrodes (1) near a distal end of the insulators and electrodes. The set of contact electrodes comprises a set of positive electrodes, of which one is shown in the front in fig. 6, and a set of negative electrodes. The positive electrodes are connected at a proximal end (9) to a common positive pole (11) of a voltage source or the electrical circuitry, and the negative electrode are connected (12) to the mass of the detector, which provides an earth and/or is connected to the negative pole of the voltage source or the electrical circuitry.

Note that the slab-like electrodes in figures 5 and 6 are preferably coated e.g. by painting, over substantially the complete surface, with the exception of the contact surface (5) and the portion at the connections (11, 12) to the poles or the electrical circuitry.

In a preferred embodiment, the lowest position of the electrodes (1) is determined by an electrode stop (13), which could also comprise a sensor to signal that an electrode is supported by the stop (13) and thus is not ensured to be in contact with a pallet.

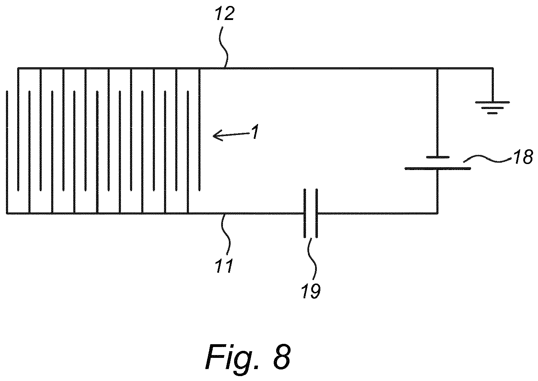

Figure 8 illustrates part of the electrical circuitry which can be used to avoid having a complete short circuit upon detection of a fastener being essentially level with or sticking out of the surface. Hereby the voltage source is a DC voltage source (18) connected in series with a capacitor (19), which is connected (11) to a set of positive electrodes. The negative pole of the DC voltage source (18) is connected (12) to the negative electrodes and to an earth.

## Claims

1. Method for detecting fasteners being essentially level with or sticking out of a surface of a transport unit for carrying goods, comprising the steps of:
a) conveying the transport unit in a machine direction underneath a detector comprising a set of at least two separated contact electrodes arranged essentially parallel to the machine direction, wherein the electrodes comprise a pre-defined electrode thickness *dₑ* and the electrodes are separated over a pre-defined inter-electrode distance *dᵢ*,
wherein the surface makes contact continuously with at least two adjacent electrodes of the set of electrodes during conveyance of the transport unit underneath the detector;
b) applying a voltage difference across two adjacent contact electrodes during at least part of step (a);
c) measuring an electrical parameter such as a resistance, a conductivity, a short circuit, a current or a voltage, between said two adjacent contact electrodes;
d) detecting a change in the electrical parameter between said two adjacent contact electrodes, thereby detecting a fastener being essentially level with or sticking out of the surface of the transport unit.

2. The method according to claim 1, wherein the transport unit is a pallet.

3. The method according to claim 1 or 2, wherein the electrodes are independently pivotably suspended around a transversal axis such that each electrode follows the surface locally and independently from other electrodes.

4. The method according to claim any of the previous claims, wherein the electrodes have a slab-like form and preferably are separated by a set of slab-like insulators having a thickness of at most said inter-electrode distance, each insulator of the set being positioned in between two adjacent electrodes.

5. The method according to any of the previous claims, wherein the voltage difference across two adjacent contact electrodes is applied continuously and preferably essentially during the complete step (a);

6. The method according to any of the previous claims, comprising the step of:
e) signaling the fastener detection to an operator and/or another machine and/or re-directing the transport unit if a change in electrical parameter is detected.

7. The method according to any of the previous claims, wherein the fasteners of the pallet comprise a fastener head having a head width or head diameter, whereby the width of an electrode thickness flanked by two inter-electrode distances (*dₑ* + *2dᵢ*) is smaller than the head width or head diameter, preferably whereby the fasteners of the transport unit comprise a fastener body having a body width or body diameter, whereby the width of an electrode thickness flanked by two inter-electrode distances (*dₑ* + *2dᵢ*) is smaller than the body width or body diameter.

8. The method according to any of the previous claims, wherein the fasteners are nails and whereby the surface comprises wood, preferably is made from wood.

9. The method according to any of the previous claims, wherein the voltage difference is a DC voltage difference of at least 10VDC, preferably between 22 and 26VDC, more preferably about 24VDC.

10. The method according to any of the previous claims, wherein the electrodes are sliding electrodes and the electrodes make contact with the surface by sliding over the surface or wherein the set of electrodes are rotatably suspended around a rotation axis and make contact with the surface by rolling over the surface.

11. Apparatus for detecting fasteners being essentially level with or sticking out of a surface of a transport unit for carrying goods, such as a pallet, the apparatus comprising
- a conveyor for conveying transport units in a machine direction;
- a set of detectors arranged above the conveyor, each detector comprising a set of at least two separated contact electrodes arranged essentially parallel to the machine direction,
wherein the electrodes comprise a pre-defined electrode thickness and the electrodes are separated over a pre-defined inter-electrode distance,
wherein each of the contact electrodes are configured to continuously make contact with the surface of the transport unit;
- electrical circuitry comprising power supply arranged to provide a voltage difference between two adjacent contact electrodes and comprising a measuring circuit arranged for measuring an electrical parameter such as a resistance, a conductivity, a short circuit, a current or a voltage, between said two adjacent contact electrodes, and
- an indicator arranged for detecting a change in the electrical parameter, thereby detecting a fastener being essentially level with or sticking out of the surface of the transport unit.

12. Apparatus according to claim 11, wherein the electrodes are independently pivotably suspended around a transversal axis.

13. Apparatus according to claims 11 or 12, wherein the electrodes have a slab-like form and preferably are separated by a set of slab-like insulators having a thickness of at most said inter-electrode distance, each insulator of the set being positioned in between two adjacent electrodes.

14. The apparatus according to any of the claims 11 to 13, comprising a set of mechanical actuators such as springs or leaf springs which are configured to push the electrodes to the surface such that the contact electrodes make contact continuously with the surface.

15. Detector for use in an apparatus according to any of the claims 11 to 14 and/or in a method according to any of the claims 1 to 10, the detector comprising a set of at least two separated contact electrodes arranged essentially parallel to the machine direction, preferably the electrodes being independently pivotably suspended around a transversal axis,
wherein the electrodes comprise a pre-defined electrode thickness and the electrodes are separated over a pre-defined inter-electrode distance preferably wherein the electrodes have a slab-like form and are separated by a set of slab-like insulators having a thickness of at most said inter-electrode distance, each insulator of the set being positioned in between two adjacent electrodes,
wherein each of the contact electrodes are configured to continuously make contact with the surface of a transport unit when being conveyed underneath the detector.
